# EUROPÄISCHE PATENTANMELDUNG

(11) **EP 4 495 567 A2**
(43) Veröffentlichungstag der Anmeldung: **22.01.2025**
(21) Anmeldenummer: 24186900.7
(22) Anmeldetag: 05.07.2024
(51) Int. Cl.: G01M 3/38, G01M 5/00, E21B 47/135, F16L 7/00, G02B 6/00, H02G 1/08

(54) **VERFAHREN UND SYSTEM ZUM ÜBERWACHEN EINER GASLEITUNG**

(30) Priorität: 17.07.2023 DE 102023118866
(71) Anmelder: Westnetz GmbH, 44139 Dortmund (DE)
(72) Erfinder: Ewering, Dietmar, 48565 Steinfurt (DE)
(74) Vertreter: Bals & Vogel Patentanwälte PartGmbB

(57) **Zusammenfassung**

Die Erfindung betrifft ein Verfahren zum Überwachen einer Gasleitung (11), insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten, aufweisend:
- Bereitstellen einer Lichtwellenleitung (L), insbesondere in Form einer Glasfaserleitung, an oder in der Gasleitung (11),
- Senden eines optischen Sendesignals (S1), insbesondere in Form Laserlichts durch die Lichtwellenleitung (L),
- Empfangen eines optischen Empfangssignals (S2) aus der Lichtwellenleitung (L),
- Überwachen des optischen Empfangssignals (S2) und/oder des optischen Sendesignals (S1),
- Beurteilen eines Zustandes der Gasleitung (11) in Abhängigkeit von dem Überwachen.

## Beschreibung

Die Erfindung betrifft ein Verfahren sowie ein System zum Überwachen einer Gasleitung, insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten. Ferner betrifft die Erfindung vorteilhafte Verwendungen einer Lichtwellenleitung, insbesondere in Form einer Glasfaserleitung.

Gasleitungen werden zumeist in der Erde verlegt. Gasleitung sind daher Gefahren durch Beschädigungen (Annäherung von z. B. aktiven Baggern/Baggerbewegungen und auch von Erdbewegungen (Erschütterungen / Verschiebungen) ausgesetzt. In einem Notfall, bspw. bei einer herannahenden Gefahr und/oder einer Beschädigung, meldet sich das Gasnetz nicht. Da die Gasleitungen oft mehrere Tausende Kilometer lang sind, ist es oft nicht ersichtlich, wo und/oder was passiert ist. Die Gasleitungen müssen in einem solchen Notfall von Netz genommen werden, geleert werden und auf eine aufwendige Art und Weise untersucht werden.

Aufgabe der Erfindung ist daher einen von den oben genannten Nachteilen zumindest zum Teil zu überwinden. Insbesondere ist es Aufgabe der Erfindung ein Verfahren sowie ein System zum Überwachen einer Gasleitung, insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten, bereitzustellen. Vorzugsweise ist es Aufgabe der Erfindung ein Verfahren sowie ein System zum Überwachen einer Gasleitung zur Verfügung zu stellen, welches eine Überwachung in Echtzeit ermöglicht, welches eine ortsaufgelöste Überwachung ermöglicht, welches Anomalien detektiert, welches herannahende Gefahren vorausschauend erkennt, welches Beschädigungen frühzeitig erfasst (nicht nur aufgrund von Bauarbeiten und/oder seismologischen Aktivitäten, sondern auch aufgrund von Bauteilschäden und/oder Leckagen) und welches eine verbesserte, erweiterte Funktionalität aufweist. Ferner ist es Aufgabe der Erfindung, vorteilhafte Verwendungen einer Lichtwellenleitung, insbesondere in Form einer Glasfaserleitung, bereitzustellen.

Die Aufgabe wird gelöst durch ein Verfahren sowie ein System zum Überwachen einer Gasleitung, insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten (oder auch aufgrund von Bauteilschäden und/oder Leckagen) mit den Merkmalen der unabhängigen Ansprüche. Ferner ist die Aufgabe der Erfindung durch vorteilhafte Verwendungen einer Lichtwellenleitung, insbesondere in Form einer Glasfaserleitung, gelöst. Merkmale, die zu unterschiedlichen Ausführungsformen und/oder Aspekten der Erfindung offenbart werden dürfen miteinander kombiniert werden, ohne den Rahmen der Offenbarung zu verlassen.

Die Erfindung sieht vor ein Verfahren zum Überwachen einer Gasleitung, insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten (oder auch aufgrund von Bauteilschäden und/oder Leckagen),
aufweisend folgende Verfahrensschritte:
- Bereitstellen (gemeint ist ein physisches Bereitstellen und/oder ein steuerungstechnisches Bereitstellen bzw. Betreiben) einer Lichtwellenleitung, insbesondere in Form einer Glasfaserleitung, an oder in der Gasleitung,
   vorzugsweise als einen faseroptischen Sensor,
- Senden eines optischen Sendesignals, bspw. in Form Laserlichts, welches z. B. gepulst und/oder im Dauerstrich-Betrieb ausgesendet werden kann, durch die Lichtwellenleitung,
- Empfangen eines optischen Empfangssignals aus der Lichtwellenleitung,
- Überwachen des optischen Empfangssignals und/oder des optischen Sendesignals,
- Beurteilen eines Zustandes der Gasleitung in Abhängigkeit von dem Überwachen.

Die Gasleitung im Sinne der Erfindung kann insbesondere eine Gashochdruckleitung sein, die mit Drücken größer oder gleich 1 Bar, 16 Bar, 70 Bar, 84 Bar oder mehr beaufschlagt sein kann. Die Gasleitung kann sich über einige Kilometer bis Tausende von Kilometern erstrecken.

Mithilfe des Verfahrens kann eine Überwachung der Gasleitung, vorzugsweise in Echtzeit, sogar auf große Distanzen, bspw. in einer Leitzentrale bzw. Gaslastwarte ermöglicht werden. Die Überwachung kann vorteilhafterweise präzise und ortsaufgelöst erfolgen. Mithilfe des Verfahrens können Anomalien detektiert und klassifiziert werden. Mithilfe des Verfahrens können herannahende Gefahren vorausschauend erkannt werden. Mithilfe des Verfahrens können Beschädigungen frühzeitig erfasst werden (nicht nur aufgrund von Bauarbeiten und/oder seismologischen Aktivitäten, sondern auch aufgrund von Bauteilschäden und/oder Leckagen). Mithilfe des Verfahrens kann eine verbesserte, erweiterte Funktionalität breitgestellt werden, wie z. B. Datenaufnahme und Auswertung, Visualisierung von Ergebnissen der Überwachung, Warnung und Alarmierung im Notfall, Ansteuerung von Absperrarmaturen usw.

Ferner kann das Verfahren vorsehen, dass zum Bereitstellen der Lichtwellenleitung an oder in der Gasleitung die Lichtwellenleitung in die Gasleitung eingezogen wird. Auf diese Weise kann die Lichtwellenleitung auf Schwingungen, Beschädigungen und/oder Leckage der Gasleitung reagieren. Somit kann eine verbesserte Überwachung der Gasleitung auf herannahende Gefahren und/oder Beschädigungen bereitgestellt werden.

Weiterhin kann das Verfahren vorsehen, dass zum Bereitstellen der Lichtwellenleitung an oder in der Gasleitung eine erste Durchbohrung in die Gasleitung eingebracht wird, vorzugsweise unter Normalbetrieb der Gasleitung, d. h. bei einer durchflossenen Gasleitung. Auf diese Weise kann sichergestellt werden, dass das System an Leitungen angebracht werden kann, die bereits im Betrieb sind, ohne die Leitungen abschalten und/oder leeren zu müssen. Die Lichtwellenleitung kann durch die erste Durchbohrung in die Gasleitung eingezogen werden.

Des Weiteren kann das Verfahren vorsehen, dass eine zweite Durchbohrung in die Gasleitung eingebracht wird, um die Lichtwellenleitung aus der Gasleitung herauszuziehen, vorzugsweise auf einer Entfernung (bspw. über einige Kilometer bis Tausende von Kilometern) zu einer ersten Durchbohrung. Auf diese Weise kann die Lichtwellenleitung als ein faseroptischer Sensor und/oder als ein Datenübertragungselement dienen.

Zum Bereitstellen der Lichtwellenleitung an oder in der Gasleitung kann ein Montagesystem verwendet werden, welches bspw. durch mindestens eine von den nachfolgenden Komponenten gebildet wird:
- eine erste Montagehilfskammer für eine, insbesondere senkrechte, Anbohrung der Gasleitung, vorzugsweise mit einem Hilfswerkzeug zur Einbringung eines Bohrwerkszeuges und/oder mindestens eines Hilfswerkzeuges zur Montage der Lichtwellenleitung in der Gasleitung,
- eine zweite Montagehilfskammer für eine, insbesondere schräge, Anbohrung der Gasleitung, vorzugsweise mit mindestens einem Hilfswerkzeug zur Einbringung einer Einfahrrampe für einen Einzugroboter, der Lichtwellenleitung aus einer Spule, eines Optokopplerflansches, bevorzugt mit einer Einführ- und Kupplungsstange und/oder einer Kupplung,
- einen ersten, insbesondere gasdichten, Abschlussflansch, vorzugsweise mit gashochdruckfesten Durchführungsöffnungen für ein Anbohrgestänge und/oder für mindestens ein Hilfswerkzeug zur Montage der Lichtwellenleitung in der Gasleitung,
- einen zweiten, insbesondre gasdichten, Abschlussflansch, vorzugsweise mit gashochdruckfesten Durchführungsöffnungen mindestens ein Hilfswerkzeug zur Einbringung einer Einfahrrampe, einen Einziehroboter und/oder eine Spule,
- ein erstes, insbesondere gashochdruckfestes, Sichtfenster zur Kontrolle der Montage,
- ein zweites, insbesondere gashochdruckfestes, Sichtfenster zur Kontrolle der Montage,
- ein, insbesondere gashochdruckfestes, Verbindungsteil für eine erste Montagehilfskammer und eine zweite Montagehilfskammer, vorzugsweise in Form eines Spezialaufschweißformteils,
- einen Einzugroboter, vorzugsweise mit mindestens einem Sensorelement, einer Kamera, einer Fahrkontrolle, einem Drucksensor, einem Temperatursensor und/oder einem Massenflusssensor, und/oder einer Kupplung für die Befestigung der Lichtwellenleitung aus einer Spule, und/oder
- einer Vielzahl an Ventilen zum Entlüften, Inertisieren und/oder Druckentlasten einer ersten Montagehilfskammer und/oder einer zweiten Montagehilfskammer.

Zudem kann das Verfahren vorsehen, dass beim Überwachen des optischen Empfangssignals und/oder des optischen Sendesignals eine Intensität, eine Wellenlänge, eine Frequenz, eine Polarisation und/oder eine Laufzeit der optischen Signale ausgewertet werden. Auf diese Weise können vielfältige Analysetechniken und/oder flexible Auswertemethoden für die optischen Signale ermöglicht werden.

Außerdem kann das Verfahren vorsehen, dass das optische Empfangssignal als ein Streusignal des optischen Sendesignals bereitgestellt wird. Auf diese Weise kann eine Sende- und Empfangsvorrichtung zusammengelegt werden und die Auswerte- und/oder Steuerungselektronik nahe an der Sende- und Empfangsvorrichtung bereitgestellt werden.

Zum einen kann zum Beurteilen eines Zustandes der Gasleitung das optische Empfangssignal auf eine Intensität, eine Wellenlänge, eine Frequenz, eine Polarisation und/oder eine Laufzeit ausgewertet werden. Als ein Auswertverfahren ist dabei ein OTDR-Verfahren denkbar. Somit kann eine Technik im Zeitbereich der optischen Signale genutzt werden.

Zum anderen kann zum Beurteilen eines Zustandes der Gasleitung das optische Empfangssignal, vorzugsweise im Vergleich zum optischen Sendesignal, auf eine Intensität, eine Wellenlänge, eine Polarisation, eine Laufzeit und/oder eine Frequenz ausgewertet werden. Als ein Auswertverfahren ist dabei ein OFDR-Verfahren denkbar. Somit kann eine Technik im Frequenzbereich der optischen Signale genutzt werden.

Ferner kann das Verfahren vorsehen, dass das optische Empfangssignal als ein Empfangssignal des optischen Sendesignals bereitgestellt wird (gemeint ist ein Empfangssignal am Ausgang der Leitung). Auch somit können effektive Techniken bereitgestellt werden, um die Änderungen in der Intensität, insbesondere durch eine über eine Dämpfungsmessung, eine Wellenlänge, eine Frequenz, eine Polarisation und/oder eine Laufzeit auswerten zu können, die auf eine vorteilhafte Weise zum Beurteilen eines Zustandes der Gasleitung dienen können.

Grundsätzlich ist es denkbar, dass zum Beurteilen eines Zustandes der Gasleitung die Lichtwellenleitung als ein faseroptischer Sensor, bspw. als ein faseroptischer Drucksensor, als ein faseroptischer Temperatursensor und/oder als ein faseroptischer Schwingungssensor, betrieben werden kann. Auf diese Weise können vielfältige Analysetechniken und/oder flexible Auswertemethoden für die optischen Signale ermöglicht werden.

Vorteilhafterweise kann beim Beurteilen eines Zustandes der Gasleitung ein ortsaufgelöstes Beurteilen des Zustandes der Gasleitung durchgeführt werden. Auf diese Weise können die Ergebnisse der Überwachung nicht nur einen Störfall und/oder einen Notfall melden, sondern auch einen genauen Ort an Gasleitung angeben. Das Einleiten von Gegenmaßnahmen und/oder Wartungsarbeiten kann dadurch zielgerichtet und effektiv erfolgen.

Vorzugsweise kann beim Beurteilen eines Zustandes der Gasleitung eine Lokalisierung von Orten einer herannahenden Gefahr und/oder einer Beschädigung der Gasleitung durchgeführt werden. Auf diese Weise können die Ergebnisse der Überwachung sämtliche Störfälle und/oder Notfälle entlang der Gasleitung abbilden. Die Überwachung kann dadurch auf eine verbesserte Weise erfolgen.

Weiterhin kann das Verfahren vorsehen, dass beim Beurteilen eines Zustandes der Gasleitung ein künstliches neuronales Netz verwendet wird, welches speziell dazu trainiert ist, anhand der optischen Signale der Lichtwellenleitung Anomalien zu erkennen und/oder zu klassifizieren, die auf eine herannahende Gefahr und/oder eine Beschädigung der Gasleitung hinweisen. Das künstliche neuronale Netz kann in einer ortsnahen und/oder einer entfernten Auswertevorrichtung (102), vorzugsweise in einer Leitzentrale, hinterlegt sein. Künstliche neuronale Netze eignen sich auf eine effektive Weise dazu, um elektromagnetische Signale im optischen Bereich zu analysieren.

Des Weiteren kann das Verfahren vorsehen, dass zum Beurteilen eines Zustandes der Gasleitung zusätzlich zur Lichtwellenleitung als ein faseroptischer Sensor mindestens ein weiterer Sensor verwendet wird. Ein solcher weiterer Sensor kann bspw. an oder in der Gasleitung angeordnet werden. Ein solcher weiterer Sensor kann bspw. mindestens einen von den folgenden Sensorarten aufweisen:
- einen Drucksensor,
- einen Temperatursensor,
- einen Massenflusssensor,
- Schwingungssensor,
- akustischer Sensor, usw.

Auf diese Weise können die Ergebnisse der Überwachung plausibilisiert werden, wodurch eine besonders sichere und zuverlässige Überwachung sichergestellt werden kann.

Vorteilhafterweise kann das Verfahren zum Echtzeitüberwachen der Gasleitung durchgeführt werden. Das Verfahren ermöglicht somit eine kontinuierliche Überwachung der Gasleitung, sogar auf Abstand zur Gasleitung, bspw. in einer Lastwarte/Leitzentrale. Hierzu kann das System die Ergebnisse der Überwachung über geeignete Kommunikationsschnittstellen auf die Lastwarte/Leitzentrale, drahtgebunden und/oder drahtlos, übermitteln.

Ferner kann das Verfahren mindestens einen weiteren Verfahrensschritt aufweisen:
- Übermitteln von Signalen und/oder Ergebnissen der Überwachung an eine Leitzentrale.

Hierzu kann in dem System bspw. eine Sendevorrichtung vorgesehen sein. Die Sendevorrichtung kann drahtgebunden und/oder drahtlos, übermitteln und eine kontinuierliche Überwachung der Gasleitung ermöglichen.

Weiterhin kann das Verfahren mindestens einen weiteren Verfahrensschritt aufweisen:
- Visualisieren von Signalen und/oder Ergebnissen der Überwachung.

Hierzu kann in dem System und/oder in einer Leitzentrale bspw. eine Anzeigevorrichtung vorgesehen sein. Auf diese Weise können die Ergebnisse der Überwachung einem Benutzer angezeigt werden. Ferner kann eine Möglichkeit zur Visualisierung von Signalen und/oder Ergebnissen der Überwachung auf einer entsprechenden Anwendung (APP), bspw. auf mobilen Endgeräten, bereitgestellt werden. Diese Möglichkeit kann vorzugsweise neben der Möglichkeit einer automatisierten Ansteuerung von Absperrarmaturen bereitgestellt werden. Auf diese Weise kann der verantwortliche Mitarbeiter (u.a. Bereitschaftshabende) einen aktiven Zugriff erhalten und die Überwachung des Systems in seinem Zuständigkeitsbereich, bspw. analog zu Leitzentralensicht, auf seinem mobilen Endgerät durchführen.

Des Weiteren kann das Verfahren mindestens einen weiteren Verfahrensschritt aufweisen:
- Bereitstellen mindestens einer Warnung (bspw. bei einer herannahenden Gefahr) und/oder Alarmierung (bspw. in einem Notfall) in Abhängigkeit von der Beurteilung des Zustandes der Gasleitung, wenn der Zustand der Gasleitung mindestens einen kritischen Schwellenwert erreicht.

Hierzu kann in dem System und/oder in einer Leitzentrale bspw. eine Steuervorrichtung vorgesehen sein. Vorzugsweise kann die mindestens eine Warnung und/oder Alarmierung mehrstufig bereitgestellt werden, wobei der Zustand der Gasleitung auf mehrere kritische Schwellenwerte überwacht wird. Auf diese Weise kann die Dringlichkeit zum Einleiten von Gegenmaßnahmen und/oder Wartungsmaßnahmen mehrstufig ausgegeben werden.

Zudem ist es denkbar, dass das Verfahren zum Planen, Einleiten und/oder Durchführen von Wartungsarbeiten der Gasleitung durchgeführt werden kann, insbesondere mithilfe einer ortsnahen und/oder einer entfernten Steuervorrichtung (104), vorzugsweise in einer Leitzentrale. Auf diese Weise kann ein verbesserter Betrieb und längere Lebenszeiten der Gasleitung ermöglicht werden.

Außerdem kann das Verfahren mindestens einen weiteren Verfahrensschritt aufweisen:
- Ansteuern, insbesondere automatisches Ansteuern, von Absperrarmaturen an der Gasleitung, um in einem Notfall mindestens einen betroffenen Bereich der Gasleitung abzusperren.

Hierzu kann in dem System und/oder in einer Leitzentrale bspw. eine Steuervorrichtung vorgesehen sein. Auf diese Weise können Sicherheitsmaßnahmen und/oder Wartungsmaßnahmen automatisch eingeleitet werden.

Um die Funktionalität der Lichtwellenleitung zu erweitern, kann sie zur Datenübertragung verwendet werden, insbesondere zusätzlich, vorzugsweise gleichzeitig, zum Beurteilen eines Zustandes der Gasleitung als ein faseroptischer Sensor.

Um die Funktionalität der Lichtwellenleitung zu erweitern, kann sie zum Planen eines Sensornetzes, insbesondere für Seismologie, verwendet werden.

Die Erfindung sieht weiterhin vor: ein Verwenden einer Lichtwellenleitung, insbesondere einer Glasfaserleitung, als ein faseroptischer Sensor
- zum Überwachen, vorzugsweise Echtzeitüberwachen, einer Gasleitung, insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten,
   und/oder
- zum Beurteilen, vorzugsweise ortsaufgelösten Beurteilen, eines Zustandes der Gasleitung, insbesondere einer Gashochdruckleitung.

Um die Funktionalität der Lichtwellenleitung zu erweitern, kann sie zusätzlich verwendet werden:
- zum Planen von Wartungsarbeiten der Gasleitung, insbesondere einer Gashochdruckleitung, und/oder
- zur Datenübertragung, vorzugsweise gleichzeitig zum Beurteilen eines Zustandes der Gasleitung, und/oder
- zum Planen eines Sensornetzes, insbesondere für Seismologie.

Lichtwellenleitungen eignen sich als Sensoren, die über längere Distanzen empfindlich auf Druckänderungen, Lageänderungen und/oder Temperaturänderungen reagieren können und die eine ortsaufgelöste Erkennung ermöglichen können. Die Erfindung nutzt diese Vorteile der Lichtwellenleitungen für vorteilhafte Verwendungen in Bezug auf Gasleitungen.

Des Weiteren sieht die Erfindung vor, ein System zum Überwachen einer Gasleitung, insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten,
aufweisend:
eine Lichtwellenleitung, insbesondere in Form einer Glasfaserleitung,
eine Steuervorrichtung, die speziell dazu ausgeführt ist, die Lichtwellenleitung als einen faseroptischen Sensor zu betreiben, und
eine Auswertevorrichtung, die speziell dazu ausgeführt ist, optische Signale der Lichtwellenleitung zu überwachen und einen Zustand der Gasleitung in Abhängigkeit von dem Überwachen zu beurteilen.

Die Auswertevorrichtung und/oder die Steuervorrichtung können/kann vor Ort an der Gasleitung und/oder entfernt davon in einer Leitzentrale bereitgestellt werden.

Mithilfe des Systems können die gleichen Vorteile erreicht werden, die oben im Zusammenhang mit dem Verfahren beschrieben wurden. Auf diese Vorteile wird vorliegend vollumfänglich Bezug genommen.

Vorteilhafterweise kann in der Auswertevorrichtung ein künstliches neuronales Netz zum Beurteilen eines Zustandes der Gasleitung hinterlegt sein, welches speziell dazu trainiert sein kann, anhand der optischen Signale der Lichtwellenleitung Anomalien zu erkennen und/oder zu klassifizieren, die auf eine herannahende Gefahr und/oder eine Beschädigung der Gasleitung hinweisen. Auf diese Weise kann nicht nur eine kontinuierliche und ortsaufgelöste Überwachung ermöglicht werden, sondern eine detaillierte Analyse des Störfalls und/oder des Notfalls.

Vorteilhafterweise kann das System ferner eine Sendevorrichtung zum Übermitteln von Signalen und/oder Ergebnissen der Überwachung an eine Leitzentrale aufweisen. Auf diese Weise kann eine Überwachung über lange Distanzen ermöglicht werden.

Zum Visualisieren von Signalen und/oder Ergebnissen der Überwachung kann das System ferner eine Anzeigevorrichtung aufweisen. Die Anzeigevorrichtung kann vor Ort an der Gasleitung und/oder entfernt davon in einer Leitzentrale bereitgestellt werden.

Vorteilhafterweise kann die Steuervorrichtung zum Bereitstellen mindestens einer Warnung und/oder Alarmierung in Abhängigkeit von der Beurteilung des Zustandes der Gasleitung aufgeführt sein, wenn der Zustand der Gasleitung mindestens einen kritischen Schwellenwert erreicht.

Vorzugsweise kann die Steuervorrichtung dazu ausgeführt sein, die mindestens eine Warnung und/oder Alarmierung mehrstufig bereitzustellen, wobei der Zustand der Gasleitung auf mehrere kritische Schwellenwerte durch die Steuervorrichtung überwacht wird.

Um die Funktionalität bei dem System zu erhöhen, kann die Steuervorrichtung zum Planen, Einleiten und/oder Durchführen von Wartungsarbeiten der Gasleitung ausgeführt sein.

Um die Funktionalität bei dem System zu erhöhen, kann die Steuervorrichtung zum Ansteuern, insbesondere automatischen Ansteuern, von Absperrarmaturen an der Gasleitung aufgeführt sein, um mindestens in einem Notfall einen betroffenen Bereich der Gasleitung abzusperren.

Das System kann in einem Montagesystem implementiert sein, welches vorzugsweise nach dem Bereitstellen der Lichtwellenleitung an oder in der Gasleitung zumindest zum Teil an der Gasleitung verbleiben kann.

Weitere Vorteile, Merkmale und Einzelheiten der Erfindung ergeben sich aus der nachfolgenden Beschreibung, in der unter Bezugnahme auf die Zeichnung mehrere Ausführungsbeispiele der Erfindung im Einzelnen beschrieben sind. Die Figur zeigt:

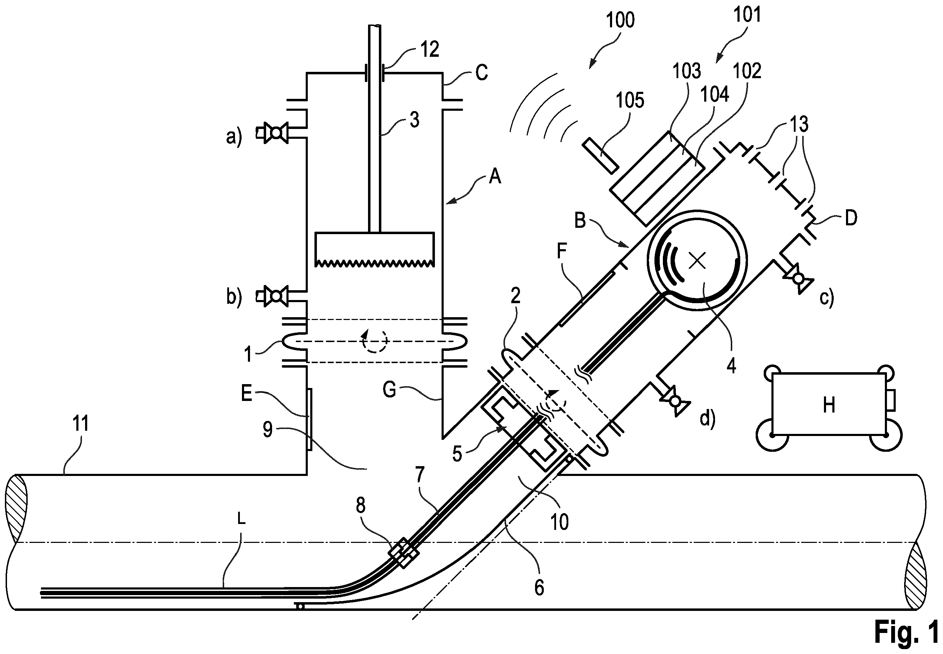

Fig. 1 eine schematische Darstellung eines Systems zum Überwachen einer Gasleitung.

Die Fig. 1 dient zum Erklären eines Verfahrens, welches zum Überwachen einer Gasleitung 101, insbesondere einer Gashochdruckleitung, bspw. für ein Erdgas, auf eine herannahende Gefahr und/oder eine Beschädigung, z. B. aufgrund von Bauarbeiten seismologischen Aktivitäten, Bauteilschäden und/oder Leckagen, entwickelt wurde.

Das Verfahren weist folgende Verfahrensschritte auf:
- Bereitstellen (gemeint ist ein physisches Bereitstellen und/oder ein steuerungstechnisches Bereitstellen bzw. Betrieben) einer Lichtwellenleitung L (kann einfachheitshalber als Glasfaser bezeichnet werden), insbesondere in Form einer Glasfaserleitung, an oder in der Gasleitung 101,
   vorzugsweise als einen faseroptischen Sensor,
- Senden eines optischen Sendesignals S1, bspw. in Form Laserlichts, welches z. B. gepulst und/oder im Dauerstrich-Betrieb ausgesendet werden kann, durch die Lichtwellenleitung L,
- Empfangen eines optischen Empfangssignals S2 aus der Lichtwellenleitung L,
- Überwachen des optischen Empfangssignals S2 und/oder des optischen Sendesignals S1,
- Beurteilen eines Zustandes der Gasleitung 101 in Abhängigkeit von dem Überwachen.

Die Gasleitung 101 kann insbesondere eine Gashochdruckleitung sein, die mit Drücken größer 1 Bar, 16 Bar, 70 Bar, 84 Bar oder sogar mehr beaufschlagt werden kann. Die Gasleitung kann sich über einige wenige Kilometer bis mehrere Tausende von Kilometern erstrecken.

Das Verfahren ermöglicht eine Überwachung der Gasleitung, vorzugsweise in Echtzeit, sogar auf große Distanzen, bspw. in einer Leitzentrale bzw. Gaslastwarte, die vorteilhafterweise präzise und ortsaufgelöst erfolgen kann. Mithilfe des Verfahrens können Anomalien detektiert und sogar nach ihrer Art (Leckage, Materialschaden, Erschütterungen aufgrund von Erdbeben, Bauarbeiten, usw.) klassifiziert werden. Mithilfe des Verfahrens können herannahende Gefahren auf eine vorteilhafterweise im Voraus erkannt werden. Mithilfe des Verfahrens können Beschädigungen unverzüglich erfasst werden (nicht nur aufgrund von Bauarbeiten und/oder seismologischen Aktivitäten, sondern auch aufgrund von Bauteilschäden und/oder Leckagen). Mithilfe des Verfahrens kann außerdem eine verbesserte, erweiterte Funktionalität breitgestellt werden, wie z. B. Datenaufnahme und Auswertung, Visualisierung von Ergebnissen der Überwachung, Warnung und Alarmierung im Notfall, Ansteuerung von Absperrarmaturen usw.

Wie es die Fig. 1 andeutet, kann zum Bereitstellen der Lichtwellenleitung L an oder in der Gasleitung 101 die Lichtwellenleitung L in die Gasleitung 101 eingezogen werden. Auf diese Weise kann die Lichtwellenleitung L auf Schwingungen, Beschädigungen und/oder Leckage der Gasleitung 101 reagieren.

Zum Einziehen der Lichtwellenleitung L in der Gasleitung 100 kann eine erste Durchbohrung 9 in die Gasleitung 101 eingebracht werden. Dies kann im Normalbetrieb der Gasleitung 101, d. h. bei einer durchflossenen Gasleitung 101, erfolgen. Hierzu kann ein spezielles Montagesystem 100 dienen.

Des Weiteren kann eine zweite Durchbohrung (nicht gezeigt) in die Gasleitung 101 eingebracht werden, um die Lichtwellenleitung L aus der Gasleitung 101 herauszuziehen, vorzugsweise auf einer Entfernung (bspw. über einige Kilometer bis Tausende von Kilometern) zu einer ersten Durchbohrung 9. Auf diese Weise kann die Lichtwellenleitung L als ein faseroptischer Sensor und/oder als ein Datenübertragungselement dienen.

Das Montagesystem 100 kann folgende Komponenten aufweisen:
- eine erste Montagehilfskammer A für eine, insbesondere senkrechte, Anbohrung der Gasleitung 101, vorzugsweise mit einem Hilfswerkzeug zur Einbringung eines Bohrwerkszeuges und/oder mindestens eines Hilfswerkzeuges zur Montage der Lichtwellenleitung L in der Gasleitung 101,
- eine zweite Montagehilfskammer B für eine, insbesondere schräge, Anbohrung der Gasleitung 101, vorzugsweise mit mindestens einem Hilfswerkzeug zur Einbringung einer Einfahrrampe 6 für einen Einzugroboter H, der Lichtwellenleitung L aus einer Spule 4, eines Optokopplerflansches 5, bevorzugt mit einer Einführ- und Kupplungsstange 7 und/oder einer Kupplung 8,
- einen ersten, insbesondere gasdichten, Abschlussflansch C, vorzugsweise mit gashochdruckfesten Durchführungsöffnungen 12 für ein Anbohrgestänge und/oder für mindestens ein Hilfswerkzeug zur Montage der Lichtwellenleitung L in der Gasleitung 101,
- einen zweiten, insbesondre gasdichten, Abschlussflansch D, vorzugsweise mit gashochdruckfesten Durchführungsöffnungen 13 mindestens ein Hilfswerkzeug zur Einbringung einer Einfahrrampe 6, einen Einziehroboter H und/oder eine Spule 4,
- ein erstes, insbesondere gashochdruckfestes, Sichtfenster E zur Kontrolle der Montage,
- ein zweites, insbesondere gashochdruckfestes, Sichtfenster F zur Kontrolle der Montage,
- ein, insbesondere gashochdruckfestes, Verbindungsteil für eine erste Montagehilfskammer A und eine zweite Montagehilfskammer B, vorzugsweise in Form eines Spezialaufschweißformteils G,
- einen Einzugroboter H, vorzugsweise mit mindestens einem Sensorelement, einer Kamera, einer Fahrkontrolle, einem Drucksensor, einem Temperatursensor und/oder einem Massenflusssensor, und/oder einer Kupplung für die Befestigung der Lichtwellenleitung L aus einer Spule 4, und/oder
- einer Vielzahl an Ventilen a, b, c, d zum Entlüften, Inertisieren und/oder Druckentlasten einer ersten Montagehilfskammer A und/oder einer zweiten Montagehilfskammer B.

Zudem kann das Montagesystem 100 folgende Komponenten aufweisen:
1. Absperrschieber (bspw. in Form einer Flachplatte o.ä.),
2. Absperrschieber (bspw. in Form einer Flachplatte o.ä.),
3. Bohrkrone mit Anbohrgestänge (auch für B anwendbar),
4. Spule mit aufgewickelter Glasfaser,
5. Optokopplerflansch (vorzugsweise hochdruckfest, einschraubbar) mit der Möglichkeit die Signale von der Druckseite auf die Atmosphärenseite verlustfrei zu übertragen,
6. Einfahrrampe,
7. Kupplungsstange (inkl. Glasfaser),
8. Kupplung für Glasfaser,
9. Durchbohrung in der Gasleitung 101 von Seite der Montagehilfskammer A ,
10. Durchbohrung in der Gasleitung 101 von der Seite der Montagehilfskammer B ,
12. Durchführung/Durchführungen in der Montagehilfskammer A, und/oder
13. Durchführung/Durchführungen in der Montagehilfskammer B.

Möglicher Ablauf einer Montage kann sich wie folgt gestalten:

### Anfangsstelle:

1) Auf die in Betrieb befindliche Gasleitung 11 kann an zwei Stellen (Anfang und Ende der zu überwachenden Strecke) ein System (101) Spezialaufschweißformteil G aufgeschweißt werden. Daraufhin kann die Montage von geflanschten Absperrschieber 1 und 2 erfolgen.
2) Dann kann die Montage der Montagehilfskammern A und B sowie der Gasdichten Abschlussflansche C und D erfolgen.
3) Danach kann die Demontage des Abschlussflansches C und die Einbringung von Bohrkrone 3 mit Anbohrgestänge erfolgen. Der Absperrschieber 1 kann dabei geschlossen gehalten werden.
4) Öffnung des Schieber 1 und Anbohrung der Gasleitung 11.
5) Rückziehen der Bohrkrone 3 in die Montagehilfskammer A.
6) Schließen des Absperrschiebers 1.
7) Inertisierung/Entspannung der Montagehilfskammer A, bspw. über Ventile a) und b), ggf. Abfackeln des eingespannten Gases (Gasfreiheit kann gemessen werden).
8) Demontage des Abschlussflansches C / Herausnehmen der Bohrkrone 3 / Montage des Abschlussflansches C.
9) Demontage des Abschlussflansches D.
10) Einbringung der Bohrkrone 3 in die Montagehilfskammer B. Der Absperrschieber 2 kann dabei geschlossen gehalten werden.
11) Öffnung des Absperrschiebers 2.
12) Anbohrung der Gasleitung 11.
13) Rückziehen der Bohrkrone 3 in die Montagehilfskammer B
14) Schließen es Absperrschiebers 2.
15) Inertisierung/Entspannung der Montagehilfskammer B, bspw. über Ventile c) und d), ggf. Abfackeln des eingespannten Gases (Gasfreiheit kann gemessen werden).

### Einbringungsverfahren:

(Die Schritte zur Entspannung und Inertisierung zwischen den verschiedenen Einbringungen können der Übersichtlichkeit halber im Folgenden vernachlässigt werden)
(1) Einbringung der Rampe 6,
(2) Einbringung des Einziehroboters H,
(3) Einbringung der Spule 4,
(4) Befestigung eines Glasfaserendes aus der Spule 4 an dem Fahrroboter H,
(5) Fahrroboter H an Endstelle in die Montagehilfskammer B einfahren (Glasfaserkupplung lösen),
(6) An einer Anfangsstelle die Glasfaser von der Spule 4 trennen (Kupplung montieren),
(7) Spule 4 aus der Montagehilfskammer B entnehmen,
(8) Optokopplerflansch 5 an einer Anfangsstelle und einer Endstelle einschrauben (vorher in die Montagehilfskammer B einbringen),
(9) Die Einbringung kann durch Hilfswerkzeuge (Gestänge) erfolgen und durch Sensoriken (u.a. Kamera) überwacht werden.
(10) Die Montagehilfskammern A und B können innen beleuchtet sein.
(11) Nach der Montage der Optokopplerflansches 5 können die Montagehilfskammern A und B sowie die Absperrschieber 1 und 2 entfernt werden.
(12) An den Optokopplern können die Übertragungsleitungen / Auswerteeinheiten angeschlossen und ggf. ein wetterfester Abschluss montiert werden.
(13) Das System 101 kann nun kalibriert und auf die Lastwarte aufgeschaltet werden.

Das System 101 kann (an mehreren Stellen) über Sensorelemente für Druck, Geschwindigkeit, Temperatur, Massenfluss, usw. verfügen.

Weiterhin können Schwingungsensoren und/oder Geräuschsensoren additiv zur besseren Überwachung eingebracht sein.

Beim Überwachen des optischen Empfangssignals S2 und/oder des optischen Sendesignals S1 kann eine Intensität, eine Wellenlänge, eine Frequenz, eine Polarisation und/oder eine Laufzeit der optischen Signale S1, S2 ausgewertet werden.

Das optische Empfangssignal S2 kann als ein Streusignal des optischen Sendesignals S1 bereitgestellt werden. Auf diese Weise kann eine Sende- und Empfangsvorrichtung zusammengelegt werden und die Auswerte- und/oder Steuerungselektronik nahe an der Sende- und Empfangsvorrichtung bereitgestellt werden.

Dabei kann das optische Empfangssignal S2 auf eine Intensität, eine Wellenlänge, eine Frequenz, eine Polarisation und/oder eine Laufzeit ausgewertet werden. Als ein Auswertverfahren ist dabei ein OTDR-Verfahren denkbar.

Zum anderen kann dabei das optische Empfangssignal S2, vorzugsweise im Vergleich zum optischen Sendesignal S1, auf eine Intensität, eine Wellenlänge, eine Polarisation, eine Laufzeit und/oder eine Frequenz ausgewertet werden. Als ein Auswertverfahren ist dabei ein OFDR-Verfahren denkbar.

Ferner kann das optische Empfangssignal S2 als ein Empfangssignal S2 des optischen Sendesignals S1 bereitgestellt wird (gemeint ist ein Empfangssignal am Ausgang der Leitung).

Grundsätzlich ist es denkbar, dass zum Beurteilen eines Zustandes der Gasleitung 11 die Lichtwellenleitung L als ein faseroptischer Sensor, bspw. als ein faseroptischer Drucksensor, als ein faseroptischer Temperatursensor und/oder als ein faseroptischer Schwingungssensor, betrieben werden kann.

Vorteilhafterweise kann beim Beurteilen eines Zustandes der Gasleitung 11 ein ortsaufgelöstes Beurteilen des Zustandes der Gasleitung 11 durchgeführt werden. Vorzugsweise kann beim Beurteilen eines Zustandes der Gasleitung 11 eine Lokalisierung von Orten einer herannahenden Gefahr und/oder einer Beschädigung der Gasleitung 11 durchgeführt werden.

Zum Beurteilen eines Zustandes der Gasleitung 11 kann vorteilhafterweise ein künstliches neuronales Netz verwendet werden, welches speziell dazu trainiert ist, anhand der optischen Signale S1, S2 der Lichtwellenleitung L Anomalien zu erkennen und/oder zu klassifizieren, die auf eine herannahende Gefahr und/oder eine Beschädigung der Gasleitung 11 hinweisen. Das künstliche neuronale Netz kann in einer ortsnahen und/oder einer entfernten Auswertevorrichtung 102, vorzugsweise in einer Leitzentrale, hinterlegt sein. Künstliche neuronale Netze eignen sich, um elektromagnetische Signale im optischen Bereich zu analysieren. Da die Gasleitung 11 bei Erschütterungen, Beschädigungen und/oder Leckagen in Schwingungen versetzt werden kann, die sich auf die Lichtwellenleitungseigenschaften auswirken können, können künstliche neuronale Netze schnelle und präzise Ergebnisse ermöglichen.

Vorteilhafterweise kann das Verfahren zum Echtzeitüberwachen der Gasleitung 11 durchgeführt werden.

Ferner kann das Verfahren mindestens einen weiteren Verfahrensschritt aufweisen:
- Übermitteln von Signalen und/oder Ergebnissen der Überwachung an eine Leitzentrale.

Wie es die Fig. 1 andeutet, kann hierzu in dem System 101 bspw. eine Sendevorrichtung 105 vorgesehen sein. Die Sendevorrichtung 105 kann drahtgebunden und/oder drahtlos, übermitteln und eine kontinuierliche Überwachung der Gasleitung 11 ermöglichen.

Weiterhin kann das Verfahren mindestens einen weiteren Verfahrensschritt aufweisen:
- Visualisieren von Signalen und/oder Ergebnissen der Überwachung.

Wie es die Fig. 1 andeutet, kann hierzu in dem System 101 und/oder in einer Leitzentrale bspw. eine Anzeigevorrichtung 103 vorgesehen sein.

Des Weiteren kann das Verfahren mindestens einen weiteren Verfahrensschritt aufweisen:
- Bereitstellen mindestens einer Warnung (bspw. bei einer herannahenden Gefahr) und/oder Alarmierung (bspw. in einem Notfall) in Abhängigkeit von der Beurteilung des Zustandes der Gasleitung 11, wenn der Zustand der Gasleitung 11 mindestens einen kritischen Schwellenwert erreicht.

Wie es die Fig. 1 andeutet, kann hierzu in dem System 101 und/oder in einer Leitzentrale bspw. eine Steuervorrichtung 104 vorgesehen sein. Vorzugsweise kann die mindestens eine Warnung und/oder Alarmierung mehrstufig bereitgestellt werden wobei der Zustand der Gasleitung 11 auf mehrere kritische Schwellenwerte überwacht werden kann.

Das Verfahren kann ferner zum Planen, Einleiten und/oder Durchführen von Wartungsarbeiten der Gasleitung 11 durchgeführt werden, insbesondere mithilfe einer ortsnahen und/oder einer entfernten Steuervorrichtung 104, vorzugsweise in einer Leitzentrale.

Außerdem kann das Verfahren mindestens einen weiteren Verfahrensschritt aufweisen:
- Ansteuern, insbesondere automatisches Ansteuern, von Absperrarmaturen an der Gasleitung 11, um in einem Notfall mindestens einen betroffenen Bereich der Gasleitung 11 abzusperren.

Wie es die Fig. 1 andeutet, kann hierzu in dem System 101 und/oder in einer Leitzentrale bspw. eine Steuervorrichtung 104 vorgesehen sein.

Um die Funktionalität der Lichtwellenleitung L zu erweitern, kann sie zur Datenübertragung verwendet werden, insbesondere zusätzlich, vorzugsweise gleichzeitig, zum Beurteilen eines Zustandes der Gasleitung 11 als ein faseroptischer Sensor.

Um die Funktionalität der Lichtwellenleitung L zu erweitern, kann sie zum Planen eines Sensornetzes, insbesondere für Seismologie, verwendet werden.

Ein System 101 zum Überwachen einer Gasleitung 11, insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten, stellt ebenfalls einen Aspekt der Erfindung dar,
aufweisend:
eine Lichtwellenleitung L, insbesondere in Form einer Glasfaserleitung,
eine Steuervorrichtung 104, die speziell dazu ausgeführt ist, die Lichtwellenleitung L als einen faseroptischen Sensor zu betreiben, und
eine Auswertevorrichtung 102, die speziell dazu ausgeführt ist, optische Signale S1, S2 der Lichtwellenleitung L zu überwachen und einen Zustand der Gasleitung 11 in Abhängigkeit von dem Überwachen zu beurteilen.

Das System 101 kann in dem Montagesystem 100 implementiert sein, welches nach dem Bereitstellen der Lichtwellenleitung L an oder in der Gasleitung 100 zumindest zum Teil an der Gasleitung 100 verbleiben kann.

Ein korrespondierendes Montagesystem 100 kann ebenfalls einen Aspekt der Erfindung bilden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 100: Montagesystem

- 101: System
- 102: Auswertevorrichtung
- 103: Anzeigevorrichtung
- 104: Steuervorrichtung

- 1: Absperrschieber
- 2: Absperrschieber
- 3: Bohrkrone
- 4: Spule
- 5: Optokopplerflansch
- 6: Einfahrrampe
- 7: Kupplungsstange
- 8: Kupplung
- 9: Durchbohrung
- 10: Durchbohrung
- 11: Gasleitung
- 12: Durchführungsöffnungen
- 13: Durchführungsöffnungen

- A: Montagehilfskammer
- B: Montagehilfskammer
- C: Abschlussflansch
- D: Abschlussflansch

- a: Ventil
- b: Ventil
- c: Ventil
- d: Ventil

- E: Sichtfenster
- F: Sichtfenster
- G: Spezialaufschweißformteil
- H: Einzugroboter

- L: Lichtwellenleitung

- S1: Sendesignal
- S2: Empfangssignal

## Patentansprüche

1. Verfahren zum Überwachen einer Gasleitung (11), insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten,
aufweisend:
- Bereitstellen einer Lichtwellenleitung (L), insbesondere in Form einer Glasfaserleitung, an oder in der Gasleitung (11),
- Senden eines optischen Sendesignals (S1), insbesondere in Form Laserlichts durch die Lichtwellenleitung (L),
- Empfangen eines optischen Empfangssignals (S2) aus der Lichtwellenleitung (L),
- Überwachen des optischen Empfangssignals (S2) und/oder des optischen Sendesignals (S1),
- Beurteilen eines Zustandes der Gasleitung (11) in Abhängigkeit von dem Überwachen.

2. Verfahren nach Anspruch 1,
wobei zum Bereitstellen der Lichtwellenleitung (L) an oder in der Gasleitung (11) die Lichtwellenleitung (L) in die Gasleitung (11) eingezogen wird,
und/oder wobei zum Bereitstellen der Lichtwellenleitung (L) an oder in der Gasleitung (100) eine erste Durchbohrung (9) in die Gasleitung (11) eingebracht wird, vorzugsweise unter Normalbetrieb der Gasleitung (11),
wobei insbesondere durch die erste Durchbohrung (9) die Lichtwellenleitung (L) in die Gasleitung (11) eingezogen wird,
und/oder wobei eine zweite Durchbohrung in die Gasleitung (11) eingebracht wird, um die Lichtwellenleitung (L) aus der Gasleitung (11) herauszuziehen, vorzugsweise auf einer Entfernung zu einer ersten Durchbohrung (9).

3. Verfahren nach Anspruch 1 oder 2,
wobei zum Bereitstellen der Lichtwellenleitung (L) an oder in der Gasleitung (11) ein Montagesystem (100) verwendet wird,
wobei insbesondere das Montagesystem (100) durch mindestens eine von den nachfolgenden Komponenten gebildet wird:
- eine erste Montagehilfskammer (A) für eine, insbesondere senkrechte, Anbohrung der Gasleitung (11), vorzugsweise mit einem Hilfswerkzeug zur Einbringung eines Bohrwerkszeuges und/oder mindestens eines Hilfswerkzeuges zur Montage der Lichtwellenleitung (L) in der Gasleitung (11),
- eine zweite Montagehilfskammer (B) für eine, insbesondere schräge, Anbohrung der Gasleitung (11), vorzugsweise mit mindestens einem Hilfswerkzeug zur Einbringung einer Einfahrrampe (6) für einen Einzugroboter (H), der Lichtwellenleitung (L) aus einer Spule (4), eines Optokopplerflansches (5), bevorzugt mit einer Einführ- und Kupplungsstange (7) und/oder einer Kupplung (8),
- einen ersten, insbesondere gasdichten, Abschlussflansch (C), vorzugsweise mit gashochdruckfesten Durchführungsöffnungen (12) für ein Anbohrgestänge und/oder für mindestens ein Hilfswerkzeug zur Montage der Lichtwellenleitung (L) in der Gasleitung (11),
- einen zweiten, insbesondere gasdichten, Abschlussflansch (D), vorzugsweise mit gashochdruckfesten Durchführungsöffnungen (13) mindestens ein Hilfswerkzeug zur Einbringung einer Einfahrrampe (6), einen Einziehroboter (H) und/oder eine Spule (4),
- ein erstes, insbesondere gashochdruckfestes, Sichtfenster (E) zur Kontrolle der Montage,
- ein zweites, insbesondere gashochdruckfestes, Sichtfenster (F) zur Kontrolle der Montage,
- ein, insbesondere gashochdruckfestes, Verbindungsteil für eine erste Montagehilfskammer (A) und eine zweite Montagehilfskammer (B), vorzugsweise in Form eines Spezialaufschweißformteils (G),
- einen Einzugroboter (H), vorzugsweise mit mindestens einem Sensorelement, einer Kamera, einer Fahrkontrolle, einem Drucksensor, einem Temperatursensor und/oder einem Massenflusssensor, und/oder einer Kupplung (8) für die Befestigung der Lichtwellenleitung (L) aus einer Spule (4), und/oder
- einer Vielzahl an Ventilen (a, b, c, d) zum Entlüften, Inertisieren und/oder Druckentlasten einer ersten Montagehilfskammer (A) und/oder einer zweiten Montagehilfskammer (B).

4. Verfahren nach einem der vorhergehenden Ansprüche,
wobei beim Überwachen des optischen Empfangssignals (S2) und/oder des optischen Sendesignals (S1) eine Intensität, eine Wellenlänge, eine Frequenz, eine Polarisation und/oder eine Laufzeit der optischen Signale (S1, S2) ausgewertet werden.

5. Verfahren nach einem der vorhergehenden Ansprüche,
wobei das optische Empfangssignal (S2) als ein Streusignal des optischen Sendesignals (S1) bereitgestellt wird,
und/oder wobei zum Beurteilen eines Zustandes der Gasleitung (11) das optische Empfangssignal (S2) auf eine Intensität, eine Wellenlänge, eine Frequenz, eine Polarisation und/oder eine Laufzeit ausgewertet wird,
insbesondere mithilfe eines OTDR-Verfahrens,
und/oder wobei zum Beurteilen eines Zustandes der Gasleitung (11) das optische Empfangssignal (S2), vorzugsweise im Vergleich zum optischen Sendesignal (S1), auf eine Intensität, eine Wellenlänge, eine Polarisation, eine Laufzeit und/oder eine Frequenz ausgewertet wird,
insbesondere mithilfe eines OFDR-Verfahrens.

6. Verfahren nach einem der vorhergehenden Ansprüche,
wobei das optische Empfangssignal (S2) als ein Empfangssignal (S2) des optischen Sendesignals (S1) bereitgestellt wird,
und/oder wobei zum Beurteilen eines Zustandes der Gasleitung (11) das optische Empfangssignal (S2) auf eine Intensität, insbesondere durch eine über eine Dämpfungsmessung, eine Wellenlänge, eine Frequenz, eine Polarisation und/oder eine Laufzeit ausgewertet wird.

7. Verfahren nach einem der vorhergehenden Ansprüche,
wobei zum Beurteilen eines Zustandes der Gasleitung (11) die Lichtwellenleitung (L) als ein faseroptischer Sensor, insbesondere als ein faseroptischer Drucksensor, als ein faseroptischer Temperatursensor und/oder als ein faseroptischer Schwingungssensor, betrieben wird.

8. Verfahren nach einem der vorhergehenden Ansprüche,
wobei beim Beurteilen eines Zustandes der Gasleitung (11) ein ortsaufgelöstes Beurteilen des Zustandes der Gasleitung (11) durchgeführt wird, und/oder wobei beim Beurteilen eines Zustandes der Gasleitung (11) eine Lokalisierung von Orten einer herannahenden Gefahr und/oder einer Beschädigung der Gasleitung (11) durchgeführt wird.

9. Verfahren nach einem der vorhergehenden Ansprüche,
wobei beim Beurteilen eines Zustandes der Gasleitung (11) ein künstliches neuronales Netz verwendet wird, welches speziell dazu trainiert ist,
anhand der optischen Signale (S1, S2) der Lichtwellenleitung (L) Anomalien zu erkennen und/oder zu klassifizieren, die auf eine herannahende Gefahr und/oder eine Beschädigung der Gasleitung (11) hinweisen,
wobei insbesondere das künstliche neuronale Netz in einer ortsnahen und/oder einer entfernten Auswertevorrichtung (102), vorzugsweise in einer Leitzentrale, hinterlegt ist.

10. Verfahren nach einem der vorhergehenden Ansprüche,
wobei zum Beurteilen eines Zustandes der Gasleitung (11) zusätzlich zur Lichtwellenleitung (L) als ein faseroptischer Sensor mindestens ein weiterer Sensor verwendet wird,
welcher insbesondere an oder in der Gasleitung (11) angeordnet ist,
vorzugsweise umfassend:
- einen Drucksensor,
- einen Temperatursensor,
- einen Massenflusssensor,
- Schwingungssensor, und/oder
- akustischer Sensor.

11. Verfahren nach einem der vorhergehenden Ansprüche,
wobei das Verfahren zum Echtzeitüberwachen der Gasleitung (11) durchgeführt wird, und/oder ferner aufweisend:
- Übermitteln von Signalen und/oder Ergebnissen der Überwachung an eine Leitzentrale,
insbesondere mithilfe einer ortsnahen Sendevorrichtung (105), und/oder ferner aufweisend:
- Visualisieren von Signalen und/oder Ergebnissen der Überwachung, insbesondere mithilfe einer ortsnahen und/oder einer entfernten Anzeigevorrichtung (103), vorzugsweise in einer Leitzentrale.

12. Verfahren nach einem der vorhergehenden Ansprüche,
ferner aufweisend:
- Bereitstellen mindestens einer Warnung und/oder Alarmierung in Abhängigkeit von der Beurteilung des Zustandes der Gasleitung (11), wenn der Zustand der Gasleitung (11) mindestens einen kritischen Schwellenwert erreicht,
insbesondere mithilfe einer ortsnahen und/oder einer entfernten Steuervorrichtung (104), vorzugsweise in einer Leitzentrale,
wobei vorzugsweise die mindestens eine Warnung und/oder Alarmierung mehrstufig bereitgestellt wird, wobei der Zustand der Gasleitung (11) auf mehrere kritische Schwellenwerte überwacht wird, und /oder wobei das Verfahren zum Planen, Einleiten und/oder Durchführen von Wartungsarbeiten der Gasleitung (11) durchgeführt wird, insbesondere mithilfe einer ortsnahen und/oder einer entfernten Steuervorrichtung (104), vorzugsweise in einer Leitzentrale.

13. Verfahren nach einem der vorhergehenden Ansprüche,
ferner aufweisend:
- Ansteuern, insbesondere automatisches Ansteuern, von Absperrarmaturen an der Gasleitung (11), um in einem Notfall mindestens einen betroffenen Bereich der Gasleitung (11) abzusperren,
insbesondere mithilfe einer ortsnahen und/oder einer entfernten Steuervorrichtung (104), vorzugsweise in einer Leitzentrale, und/oder
wobei die Lichtwellenleitung (L) zur Datenübertragung betrieben wird, insbesondere zusätzlich, vorzugsweise gleichzeitig, zum Beurteilen eines Zustandes der Gasleitung (11) als ein faseroptischer Sensor, und/oder
wobei die Lichtwellenleitung (L) zum Planen eines Sensornetzes, insbesondere für Seismologie, betrieben wird.

14. Verwenden einer Lichtwellenleitung (L), insbesondere einer Glasfaserleitung, als ein faseroptischer Sensor
- zum Überwachen, vorzugsweise Echtzeitüberwachen, einer Gasleitung (11), insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten,
und/oder
- zum Beurteilen, vorzugsweise ortsaugelösten Beurteilen, eines Zustandes der Gasleitung (11), insbesondere einer Gashochdruckleitung,
und insbesondere zusätzlich:
- zum Planen von Wartungsarbeiten der Gasleitung (11), insbesondere einer Gashochdruckleitung, und/oder
- zur Datenübertragung, vorzugsweise gleichzeitig zum Beurteilen eines Zustandes der Gasleitung (11), und/oder
- zum Planen eines Sensornetzes, insbesondere für Seismologie.

15. System (101) zum Überwachen einer Gasleitung (11), insbesondere einer Gashochdruckleitung, bspw. für ein Erdgas, auf eine herannahende Gefahr und/oder eine Beschädigung, z. B. aufgrund von Bauarbeiten und/oder seismologischen Aktivitäten,
aufweisend:
eine Lichtwellenleitung (L), insbesondere in Form einer Glasfaserleitung,
eine Steuervorrichtung (104), die speziell dazu ausgeführt ist, die Lichtwellenleitung (L) als einen faseroptischen Sensor zu betreiben, und
eine Auswertevorrichtung (102), die speziell dazu ausgeführt ist, optische Signale (S1, S2) der Lichtwellenleitung (L) zu überwachen und einen Zustand der Gasleitung (11) in Abhängigkeit von dem Überwachen zu beurteilen.

16. System (101) nach dem vorhergehenden Anspruch,
wobei in der Auswertevorrichtung (102) ein künstliches neuronales Netz zum Beurteilen eines Zustandes der Gasleitung (11) hinterlegt ist, welches speziell dazu trainiert ist, anhand der optischen Signale (S1, S2) der Lichtwellenleitung (L) Anomalien zu erkennen und/oder zu klassifizieren, die auf eine herannahende Gefahr und/oder eine Beschädigung der Gasleitung (11) hinweisen.

17. System (101) nach einem der vorhergehenden Ansprüche,
ferner aufweisend eine Sendevorrichtung (105) zum Übermitteln von Signalen und/oder Ergebnissen der Überwachung an eine Leitzentrale, und/oder ferner aufweisend eine Anzeigevorrichtung (103) zum Visualisieren von Signalen und/oder Ergebnissen der Überwachung.

18. System (101) nach einem der vorhergehenden Ansprüche,
wobei die Steuervorrichtung (104) zum Bereitstellen mindestens einer Warnung und/oder Alarmierung in Abhängigkeit von der Beurteilung des Zustandes der Gasleitung (11) aufgeführt ist, wenn der Zustand der Gasleitung (11) mindestens einen kritischen Schwellenwert erreicht,
und/oder wobei die Steuervorrichtung (104) dazu ausgeführt ist, die mindestens eine Warnung und/oder Alarmierung mehrstufig bereitzustellen,
wobei der Zustand der Gasleitung (11) auf mehrere kritische Schwellenwerte überwacht wird.

19. System (101) nach einem der vorhergehenden Ansprüche,
wobei die Steuervorrichtung (104) zum Planen, Einleiten und/oder Durchführen von Wartungsarbeiten der Gasleitung (11) ausgeführt ist,
und/oder wobei die Steuervorrichtung (104) zum Ansteuern, insbesondere automatischen Ansteuern, von Absperrarmaturen an der Gasleitung (11) aufgeführt ist, um mindestens in einem Notfall einen betroffenen Bereich der Gasleitung (11) abzusperren.

20. System (101) nach einem der vorhergehenden Ansprüche,
wobei das System (101) in einem Montagesystem (100) implementiert ist,
welches vorzugsweise nach dem Bereitstellen der Lichtwellenleitung (L) an oder in der Gasleitung (100) zumindest zum Teil an der Gasleitung (100) verbleibt.
